# EUROPEAN PATENT APPLICATION

(11) **EP 3 812 996 A1**
(43) Date of publication of application: **28.04.2021**
(21) Application number: 19821544.4
(22) Date of filing: 14.03.2019
(51) Int. Cl.: G06Q 40/00

(54) **CREDIT TAX REFUND METHOD, DEVICE AND SYSTEM AND ELECTRONIC DEVICE**

(30) Priority: 19.06.2018 CN 201810627897
(71) Applicant: Advanced New Technologies Co., Ltd., George Town, Grand Cayman KY1-9008 (KY)
(72) Inventor: LI, Xuesen, Hangzhou, Zhejiang 311121 (CN); HE, Yi, Hangzhou, Zhejiang 311121 (CN); WANG, Yiwen, Hangzhou, Zhejiang 311121 (CN)
(74) Representative: Slingsby Partners LLP
(86) International application number: PCT/CN2019/078100
(87) International publication number: WO 2019/242342

(57) **Abstract**

Provided is a method, apparatus, system and electronic device for credit tax refundment. The method for credit tax refundment comprises receiving a request for credit tax refundment and a refund amount (201); parsing the request for credit tax refundment to obtain identity information of a user applying for refundment (202); determining whether or not a user corresponding to the request is eligible for credit tax refundment based on the identity information of the user (203); obtaining an associated account based on the identity information of the user and remitting a tax refund of an equivalent amount into the associated account, in the case that the user corresponding to the request is eligible for credit tax refundment (204).

## Description

### TECHNICAL FIELD

The present disclosure relates to the technical field of data processing, and in particular to a method, apparatus, system and electronic device for credit tax refundment.

### BACKGROUND

With more and more tourists traveling overseas, tax refundment is a common act associated with shopping abroad. The traditional way of tax refundment is that the tourists have to visit the customs for verification and examination of tax refundment before their departure, and the tourists have to visit a tax refundment company to effect the tax refundment after the verification and examination succeed. The tourists have to come and go between the customs and the tax refundment company, and sometimes have to queue up. Therefore, the traditional way of tax refundment is low in efficiency, resulting in a poor user experience.

### SUMMARY

An object of the embodiments of the present disclosure is to provide a method, apparatus, system and electronic device for credit tax refundment, which determine whether or not a tourist is eligible for credit tax refundment based on the tourist's historical behavior information, and allow an eligible user to get the tax refund associated with consumption in advance before departure, which improves the efficiency of tax refundment.

In order to achieve the above object, an embodiment of the present disclosure provides a method for credit tax refundment, comprising:
receiving a request for credit tax refundment and a refund amount;
parsing the request for credit tax refundment to obtain identity information of a user applying for refundment;
determining whether or not a user corresponding to the request is eligible for credit tax refundment based on the identity information of the user;
obtaining an associated account based on the identity information of the user and remitting a tax refund of equivalent amount into the associated account, in the case that the user corresponding to the request is eligible for credit tax refundment.

In order to achieve the above object, an embodiment of the present disclosure provides an apparatus for credit tax refundment, comprising:
a request acquiring unit configured to receive a request for credit tax refundment and a refund amount;
a request parsing unit configured to parse the request for credit tax refundment to obtain identity information of a user applying for refundment;
an eligibility verifying unit configured to determine whether or not a user corresponding to the request is eligible for credit tax refundment based on the identity information of the user;
a prepaying unit configured to obtain an associated account based on the identity information of the user and remit a tax refund of an equivalent amount into the associated account, in the case that the user corresponding to the request is eligible for credit tax refundment.

In order to achieve the above object, an embodiment of the present disclosure provides another method for credit tax refundment, comprising:
receiving a request for credit tax refundment, wherein the request for credit tax refundment includes identity information, an account and consumption information of a user applying for refundment;
determining a refund amount based on the consumption information;
transmitting the request for credit tax refundment and the refund amount;
receiving refundment result information corresponding to the request for credit tax refundment, wherein the refundment result information is obtained based on eligibility for credit tax refundment of the user corresponding to the identity information and the refund amount.

In order to achieve the above object, an embodiment of the present disclosure provides another apparatus for credit tax refundment, comprising:
a request receiving unit configured to receive a request for credit tax refundment, wherein the request for credit tax refundment comprises identity information, an account and consumption information of a user applying for refundment;
a refund amount determining unit configured to determine a refund amount based on the consumption information;
a second transmitting unit configured to transmit the request for credit tax refundment and the refund amount;
a feedback information receiving unit configured to receive refundment result information corresponding to the request for credit tax refundment, wherein the refundment result information is obtained based on eligibility for credit tax refundment of the user corresponding to the identity information and the refund amount.

In order to achieve the above object, an embodiment of the present disclosure provides an electronic device including a memory, a processor, and a computer program stored in the memory and runnable on the processor, wherein the processor is configured to implement, in executing the computer program, the method for credit tax refundment as described above.

In order to achieve the above object, an embodiment of the present disclosure provides a machine readable storage medium on which a computer program is stored, wherein the computer program is configured to implement, when being executed, the steps of the method for credit tax refundment as described above.

In order to achieve the above object, an embodiment of the present disclosure provides a system for credit tax refundment comprising the above-described two apparatuses for credit tax refundment.

Comparatively with the related art, in the present disclosure, a user can utilize a credit tax refundment service as long as he/she is eligible for credit tax refundment, so that the user can get the tax refunded before departure, and can even get the tax refunded immediately after consumptions. The user can obtain a refundment credential verified by the customs in his/her actual departure, and submit the refundment credential to a tax refundment company according to prescribed rules. In this way, there is no need to queue up to apply for tax refundment, and there is no need to open a bank account specially, which greatly improves the efficiency of tax refundment. At the same time, it is possible to urge the user to keep good credit, and thereby to enhance level of social credit.

### BRIEF DESCRIPTION OF DRAWINGS

To explain the technical solutions in the embodiments of the present disclosure or in the prior art more clearly, the drawings required for describing the embodiments or the prior art will be briefly introduced as follows. Obviously, the drawings in the following description merely illustrate some embodiments of the present disclosure, and persons of ordinary skill in the art may derive other drawings from them without paying any creative effort.
FIG. 1 is a schematic diagram showing an application scenario of the present disclosure;
FIG. 2 is part one of a flowchart of a method for credit tax refundment according to an embodiment of the present disclosure;
FIG. 3 is part two of the flowchart of the method for credit tax refundment according to an embodiment of the present disclosure;
FIG. 4 is part one of a functional block diagram of an apparatus for credit tax refundment according to an embodiment of the present disclosure;
FIG. 5 is part two of the functional block diagram of the apparatus for credit tax refundment according to an embodiment of the present disclosure;
FIG. 6 is a schematic diagram showing interactions between terminals of respective roles in a system for credit tax refundment according to an embodiment of the present disclosure;
FIG. 7 is a schematic diagram of an electronic device according to an embodiment of the present disclosure.

### DETAILED DESCRIPTION

Hereinafter, the technical solutions in the embodiments of the present disclosure will be clearly and completely described in conjunction with the accompanying drawings. The features and advantageous details of the present disclosure will become apparent from the non-limiting exemplary embodiments shown in the drawings and described below. It should be noted that the features shown in the figures are not necessarily drawn to scale. In the present disclosure, description of known materials, components and processes is omitted, so as not to obscure the exemplary embodiments of the present disclosure. The examples given are merely intended to facilitate understanding of the exemplary embodiments of the present disclosure and to enable those skilled in the art to implement the exemplary embodiments. Thus, these examples should not be construed as limiting the scope of the embodiments of the present disclosure.

Unless otherwise specifically defined, technical or scientific terms used in this disclosure shall have the general meanings comprehensible by persons with general skills in the art. The terms "first", "second" and the like as used in this disclosure are not intended to denote any order, number or significance, but merely to distinguish between different components. In addition, in various embodiments of the present disclosure, the same or similar reference numerals denote the same or similar members.

In the present disclosure, a user can utilize a credit tax refundment service as long as the user is eligible for credit tax refundment. Such a novel guarantee mechanism allows the user to get the refund in advance before departure. Moreover, the user does not necessarily have to have a credit card of a designated bank to apply for the tax refundment, eliminating the case that the tax refundment get failed because the credit card limit is lower than the refund amount. Meanwhile, it helps to urge the user to keep good credit, and thus to promote the improvement of social credit and good manner.

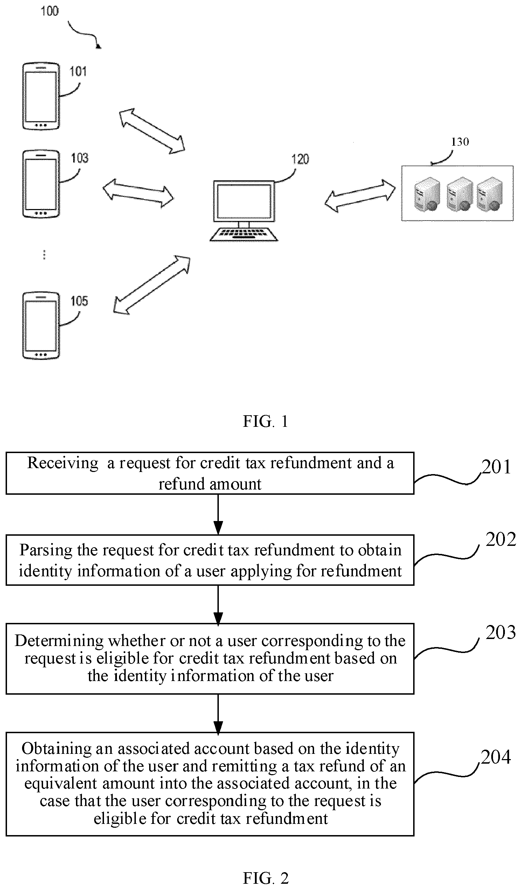

FIG. 1 is a schematic diagram showing an application scenario of the present disclosure. The credit tax refundment scenario 100 is described below in connection with a professional application for the sake of simplicity. In this application scenario, a user uses mobile terminals 101 to 105 to generate and transmit a request for credit tax refundment. The request for credit tax refundment may be generated after the consumption is done, or may be generated within a period of time after the user conducts the consumption and before his/her departure, or may be generated within a period of time after the user obtains a refundment voucher from the customs. In the application scenario shown in FIG. 1, the request for credit tax refundment is initiated by the user's mobile terminal and transmitted directly to a refundment server 120 of a tax refundment company. Alternatively, in real-time consumption settlement, the request for credit tax refundment transmitted by the mobile terminal of the user is received by a merchant's server, which then transmits the request for credit tax refundment corresponding to the consumption to the refundment server 120 of the tax refundment company. This case is not shown in FIG. 1.

In this application scenario, the mobile terminals 101 to 105 may include those having various network access functionalities and equipped with various operating systems, including but not limited to iOS, Android, Windows Phone, etc. The mobile terminals may also be terminal devices with various functionalities customized for the user's needs, including but not limited to smart phones, tablet computers, smart wearable devices and the like. Further, a relevant credit tax refundment application APP is installed in the mobile terminals 101 to 105, so that the request for credit tax refundment can be generated by the user using the credit tax refundment application APP in the mobile terminals 101 to 105.

The refundment server 120 of the tax refundment company receives the request for credit tax refundment, parses the request for credit tax refundment and obtains consumption information corresponding to the request, and the tax refundment company may obtain a refund amount according to a calculation method for the refund amount. The refundment server 120 of the tax refundment company transmits the request for credit tax refundment and the corresponding refund amount to a collaborator refundment server 130 of a tax refundment partner. In practice, the consumption information may indicate the present consumption corresponding to the present request for credit tax refundment, or may indicate multiple consumptions which have been conducted before the present request and for which the tax refundment has not been settled.

In the present disclosure, the credit of the user is used as a guarantee, so that the user can have the tax refunded in advance after the user conducts consumption abroad but before departure, and the refund got in advance is an advance payment by the tax refundment partner. This requires the user to afterwards provide a refundment credential successfully verified and examined by the customs, and the tax refundment company reimburses the tax refund corresponding to the refundment credential to the tax refundment partner upon acquisition of the valid refundment credential. In practice, a valid refundment credential is a refundment voucher that meets refundment requirements and is valid within a prescribed period of time and has been verified and examined by the customs. The refundment server 120 of the tax refundment company reimburses, upon receipt of the valid refundment credential from the user corresponding to the request for credit tax refundment, the tax refund of an equivalent amount to the collaborator refundment server of the advance payment institution, i.e., the server of the tax refundment partner. A refundment credential that does not meet the refundment requirements will fail in verification and examination by the customs, and thus becomes an invalid refundment voucher. The refundment server 120 of the tax refundment company generates user default information if it fails to receive the valid refundment credential from the user corresponding to the request for credit tax refundment, and transmits the user default information to the collaborator refundment server 130 of the tax refundment partner. After that, if the refundment server 120 of the tax refundment company receives the valid refundment credential from the user corresponding to the request for credit tax refundment, in the case that the tax refundment partner has already deducted the advance payment from the user's account, the refundment server 120 of the tax refundment company may generate a reimbursement request and transmits the reimbursement request to the collaborator refundment server 130 of the tax refundment partner.

The collaborator refundment server 130 of the tax refundment partner receives the request for credit tax refundment and the refund amount, parses the request for credit tax refundment and obtains identity information of a user applying for refundment. Historical behavior information of the user, such as the user's educational background, the user's historical honesty behavior, the user's consumption behavior, and the like, is obtained based on the identity information of the user. In practice, there may be some judgments for user's credit, for example, to judge whether the user has default in a certain period of time, whether the user has a bachelor's degree or above, and the like. It is possible to judge whether the user has good credit status based on conformity of the historical behavior information with the judgment rules, and the user with good credit status is considered eligible for credit tax refundment. In order to determine credit status of the user more accurately, a credit score of the user may be obtained based on the user's historical behavior information and in accordance with prescribed rules. The credit score is compared with a set threshold to determine whether the user is eligible for credit tax refundment.

In practice, the collaborator refundment server 130 of the tax refundment partner periodically evaluates the credit status of a registered user according to preset evaluation rules, determines whether the user has good credit status, thereby determines whether the user is eligible for credit tax refundment. It is also possible to determine whether the user has good credit status for each refundment request. The tax refundment partner can introduce in a professional credit institution to periodically evaluate the credit status of the registered users using the historical behavior information.

Once it is determined that the user is eligible for credit tax refundment, the collaborator refundment server 130 of the tax refundment partner determines an associated account based on the identity information of the user. The account may be obtained when the user registers on a platform of the tax refundment partner, and may be associated with the identity information of the user. In the case that the identity information of the user is acquired, information of the associated account can be obtained. The collaborator refundment server 130 of the tax refundment partner needs to verify the account to ensure that the advance payment can be remitted into the account. In practice, after it is determined whether the user is eligible for credit tax refundment, the collaborator refundment server 130 of the tax refundment partner may further determine whether or not the user has signed an agreement on credit tax refundment authorization. The agreement on credit tax refundment authorization enables the user to utilize the credit tax refundment within a set period of time and/or for a set number of times provided that the user is eligible for credit tax refundment. In other words, the collaborator refundment server 130 of the tax refundment partner determines whether the credit status of the user meets the conditions for each certain period of time or for each certain number of requests. Anyway, the collaborator refundment server 130 of the tax refundment partner obtains an associated account based on the identity information of the user and remit an advance payment equivalent to the refund amount into the associated account, only when the user corresponding to the request is eligible for credit tax refundment. If the tax refundment company fails to receive afterwards a valid refundment voucher provided by the user in accordance with the agreement, the collaborator refundment server 130 of the tax refundment partner may transmit a warning message to the user based on the user default information transmitted by the tax refundment company, and may effect corresponding punishment measures, which may include deducting the advance payment from the user's account. In this case, if the user provides afterwards a valid refundment voucher, the server 130 of the tax refundment partner reimburses the deducted tax refund to the user's account according to the reimbursement request transmitted from the tax refundment company. The punishment measures may further include putting the user into a credit blacklist, which may undermine other social activities of the user. In this case, if the user provides afterwards a valid refundment voucher, the collaborator refundment server 130 of the tax refundment partner may remove the user from the blacklist. The punishment measures are for urging the users to keep good credit, and thereby to improve the level of social credit and good manners.

In practical implementation, if the user wants the tax refund to be in a certain currency, the refundment server 120 of the tax refundment company or the collaborator refundment server 130 of the tax refundment partner may convert the refund amount to an equivalent amount in this certain currency according to a real-time exchange rate, so as to accommodate the user's need. The collaborator refundment server 130 of the tax refundment partner may remit the equivalent amount in this certain currency to the account of the user. The equivalent amount in the certain currency corresponds to "the equivalent amount". In this disclosure, the mobile terminal of the user may include currency information of the tax refund in the generated request for credit tax refundment.

FIG. 1 schematically illustrates a credit tax refundment environment 100 according to an embodiment of the present disclosure. This technical solution may be implemented with a computer programming language, such as java, C#, asp, C++, C, Ruby, VC++, VB, FoxPro. This disclosure is not limited to any certain computer programming language.

Further to the above description of the application scenarios, the present disclosure will be further described in detail below in connection with the examples and drawings, to make the above objects, features and advantages of the present disclosure more obvious and comprehensible.

An embodiment of the present disclosure provides a method for credit tax refundment, as shown in FIG. 2. The method for credit tax refundment may be implemented in a collaborator refundment server of a tax refundment partner. Specifically, the server may be a backend service server capable of providing financial services. The backend service server may be, for example, an Alipay backend service server or the like. In this embodiment, the server may be an electronic device having functionalities of data processing, storage and network interaction, or may be software running in the electronic device to provide support for data processing, storage and network interaction. In this embodiment, there is no limitation on the number of the servers. There may be one server, or may be several servers, or a server cluster formed by several servers. The method for credit tax refundment provided by the embodiment of the present disclosure includes:
step 201): receiving a request for credit tax refundment and a refund amount.

In this embodiment, the request for credit tax refundment is initiated by the user, and may include: the identity information of the user, consumption information and refund currency information. The refund amount is determined from the consumption information.

Step 202): parsing the request for credit tax refundment to obtain identity information of a user applying for refundment.

In this embodiment, the identity information of the user is obtained for judging whether the user issuing the request is eligible for credit tax refundment. The account information registered on the currently-utilized financial platform is obtained based on the identity information of the user, and the account is used to receive the advance payment remitted by the tax refundment partner.

Step 203): determining whether or not a user corresponding to the request is eligible for credit tax refundment based on the identity information of the user.

In practical implementation, historical behavior information of the user, such as the user's educational background, the user's historical honesty behavior, the user's consumption behavior, and the like, may be obtained based on the identity information of the user. Rules may be set up for judging the user's credit status, for example, judging whether the user has defaulted within a certain period of time, whether the user has a bachelor's degree or above, and the like. It is possible to judge whether the user has good credit status based on conformity of the historical behavior information with the judgment rules, and the user with good credit status is considered eligible for credit tax refundment. In order to determine credit status of the user more accurately, a credit score of the user may be obtained based on the user's historical behavior information in accordance with a prescribed rule. The credit score may be compared with a set threshold to determine whether the user is eligible for credit tax refundment.

In practice, the credit status of a registered user is periodically evaluated according to credit evaluation rules, to determine whether the user has good credit status, so as to determine whether the user is eligible for credit tax refundment. The user's credit status may be evaluated for each refundment request. The tax refundment partner may introduce in a professional credit institution to periodically evaluate the credit status of the registered users based on their behavior information.

Step 204): obtaining an associated account based on the identity information of the user and remitting a tax refund of an equivalent amount into the associated account, in the case that the user corresponding to the request is eligible for credit tax refundment.

In this embodiment, once it is determined that the user is eligible for credit tax refundment, the collaborator refundment server of the tax refundment partner may retrieve an associated account based on the identity information of the user. The account is registered by the user on a platform of the tax refundment partner, and is associated with the identity information of the user. In the case that the identity information of the user is obtained, the collaborator refundment server of the tax refundment partner may obtain the associated account information, and may further verify the account to ensure that the refunded tax can be remitted successfully into the account when the advance payment is conducted. In practice, after it is determined that the user is eligible for credit tax refundment, it may be further determined whether the user has signed an agreement on credit tax refundment authorization. The agreement on credit tax refundment authorization enables the user to utilize the credit tax refundment within a set period of time and/or for a set number of times provided that the user is eligible for credit tax refundment. In other words, it is determined whether the credit status of the user meets the requirements for each certain period of time or for each certain number of requests. Anyway, only when the user corresponding to the request for credit tax refundment is eligible for credit tax refundment, an advance remittance of the tax refund of the equivalent amount into the associated account is effected.

In practice, if the tax refundment company fails to receive afterwards a valid refundment voucher provided by the user in accordance with the agreement, a warning message may be transmitted to the user based on the user default information transmitted by the tax refundment company, and corresponding punishment measures may be effected. The punishment measures may include deducting the prepaid tax refund from the user's account. In this case, if the user provides afterwards a valid refundment voucher, the collaborator refundment server of the tax refundment partner may reimburse the deducted tax refund to the user's account according to the reimbursement request transmitted from the tax refundment company. The punishment measures may further include putting the user into a credit blacklist, which may undermine other social activities of the user. In this case, if the refund user provides afterwards a valid refundment voucher, the collaborator refundment server of the tax refundment partner may remove the user from the blacklist. The punishment measures are for urging the users to keep good credit status, and thereby to improve the level of social credit and good manners.

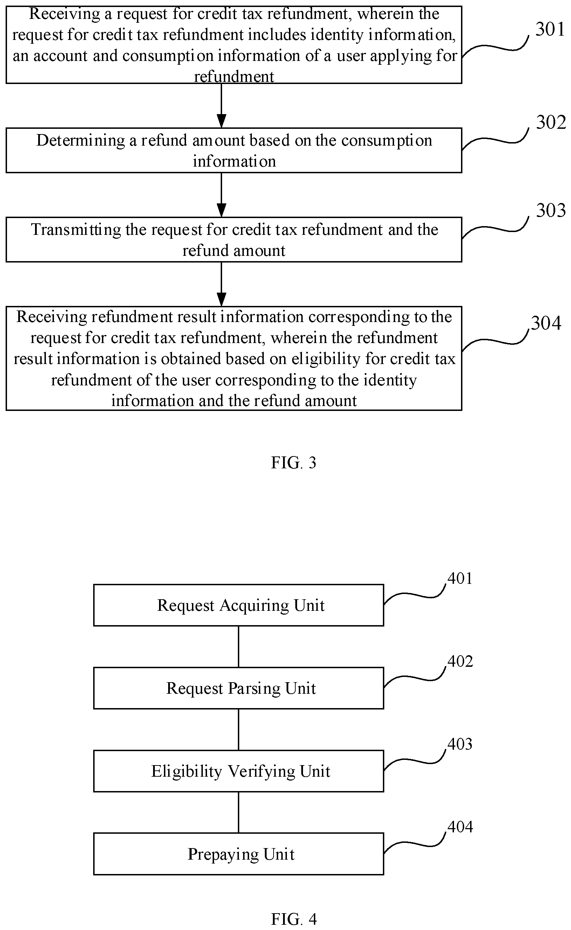

As shown, FIG. 3 is part two of the flowchart of the method for credit tax refundment according to an embodiment of the present disclosure. This method is implemented in the refundment server of the tax refundment company. The server may be a backend service server capable of providing a tax refundment service. The backend service server may be, for example, a tax refundment service platform licensed by the relevant national government. In this embodiment, the server may be an electronic device having functionalities of data processing, storage and network interaction, or may be software running in the electronic device to provide support for data processing, storage and network interaction. In this embodiment, there is no limitation on the number of the servers. There may be one server, or may be several servers, or a server cluster formed by several servers. The method for credit tax refundment includes:
step 301): receiving a request for credit tax refundment, wherein the request for credit tax refundment may include identity information, an account and consumption information of a user applying for refundment,
Step 302): determining a refund amount based on the consumption information.

In this embodiment, the refundment server of the tax refundment company receives the request for credit tax refundment, parses the request for credit tax refundment and obtains the consumption information corresponding to the request, and the tax refundment company may obtain the refund amount according to a calculation method of the refund amount. The refundment server of the tax refundment company transmits the request for credit tax refundment and the corresponding refund amount to a collaborator refundment server of a tax refundment partner.

In practice, the consumption information may indicate the present consumption corresponding to the present request for credit tax refundment, or may indicate multiple consumptions which have been conducted before the present request and for which the tax refundment has not been effected.

Step 303): transmitting the request for credit tax refundment and the refund amount.

Step 304): receiving refundment result information corresponding to the request for credit tax refundment. The refundment result information may be obtained based on eligibility for credit tax refundment of the user corresponding to the identity information and the refund amount.

In this embodiment, the credit of the user is used as a guarantee, so that the user can have the tax refunded in advance after the user conducts consumption abroad but before departure, and the refund got in advance is an advance payment by the tax refundment partner. This requires the user to afterwards provide a refundment credential successfully verified and examined by the customs, and the tax refundment company reimburses the tax refund corresponding to the refundment credential to the tax refundment partner upon acquisition of the valid refundment credential. In practice, a valid refundment credential is a refundment voucher that meets refundment requirements and is valid within a prescribed period of time and has been verified and examined by the customs. The refundment server of the tax refundment company reimburses, upon receipt of the valid refundment credential from the user corresponding to the request for credit tax refundment, the tax refund equivalent to the refund amount to a collaborator refundment server of the advance payment institution, i.e., the server of the tax refundment partner. A refundment credential that does not meet the refundment requirements cannot be successfully verified and examined by the customs, and thus becomes an invalid refundment voucher. The refundment server 120 of the tax refundment company generates user default information if it fails to receive the valid refundment credential from the user corresponding to the request for credit tax refundment, and transmits the user default information to the collaborator refundment server of the tax refundment partner. After that, if the refundment server 120 of the tax refundment company receives the valid refundment credential from the user corresponding to the request for credit tax refundment, in the case that the tax refundment partner has already deducted the advance payment from the user's account, the refundment server 120 of the tax refundment company may generate a reimbursement request and transmits the reimbursement request to the collaborator refundment server 130 of the tax refundment partner.

As can be seen from FIG. 2 and FIG. 3, in the present disclosure, a user can utilize a credit tax refundment service as long as he/she is eligible for credit tax refundment, so that the user can get the tax refunded before departure, and can even get the tax refunded immediately after consumptions. The user can obtain a refundment credential verified by the customs in his/her actual departure, and submit the refundment credential to a tax refundment company according to prescribed rules. In this way, there is no need to queue up to apply for tax refundment, and there is no need to open a bank account specially, which greatly improves the efficiency of tax refundment. At the same time, it is possible to urge the user to keep good credit status, and thereby to enhance level of social credit.

As shown, FIG. 4 is part one of functional block diagram of an apparatus for credit tax refundment according to an embodiment of the present disclosure. The apparatus for credit tax refundment may include:
a request acquiring unit 401 configured to receive a request for credit tax refundment and a refund amount;
a request parsing unit 402 configured to parse the request for credit tax refundment to obtain identity information of a user applying for refundment;
an eligibility verifying unit 403 configured to determine whether or not a user corresponding to the request is eligible for credit tax refundment based on the identity information of the user;
a prepaying unit 404 configured to obtain an associated account based on the identity information of the user and remit a tax refund of an equivalent amount into the associated account, in the case that the user corresponding to the request is eligible for credit tax refundment.

In this embodiment, the apparatus for credit tax refundment may further include:
a feedback information generating unit configured to generate refundment result information based on eligibility for credit tax refundment of the user corresponding to the identity information, the account and the refund amount;
a first transmitting unit configured to transmit the refundment result information.

In this embodiment, the eligibility verifying unit may include:
a historical behavior information acquiring module configured to acquire historical behavior information of the user corresponding to the request based on the identity information of the user;
an evaluating module configured to evaluate the historical behavior information of the user according to a credit rule, to determine whether the user is eligible for credit tax refundment.

In this embodiment, the prepaying unit may include:
an authorization determining module configured to determine whether the user has signed an agreement on credit tax refundment authorization in the case that the user is eligible for credit tax refundment, wherein the agreement on credit tax refundment authorization enables the user eligible for credit tax refundment to utilize the credit tax refundment within a set period of time and/or for a set number of times;
a refunding module configured to effect the credit tax refundment by obtaining the associated account based on the identity information of the user and remitting the tax refund of the equivalent amount into the associated account, if it is determined that the user has signed the agreement on credit tax refundment authorization.

In this embodiment, the evaluating module may include:
a credit score sub-module configured to evaluate the historical behavior information of the user based on the credit rule to obtain a credit score of the user;
a judging sub-module configured to acknowledge that the user corresponding to the request is eligible for credit tax refundment, if the credit score of the user is greater than or equal to a threshold.

In this embodiment, the apparatus for credit tax refundment may further include:
a reimbursement receiving unit configured to receive the reimbursed tax refund of the equivalent amount.

In this embodiment, the apparatus for credit tax refundment may further include:
a default information receiving unit configured to receive user default information;
a default information parsing unit configured to parse the user default information to obtain identity information, an account and an amount associated with a defaulting user.

In this embodiment, the apparatus for credit tax refundment may further include:
a deducting unit configured to deduct the tax refund of the equivalent amount from the account.

In this embodiment, the apparatus for credit tax refundment may further include:
a reimbursement requesting unit configured to receive a reimbursement request;
a reimbursement request parsing unit configured to parse the reimbursement request to obtain identity information, an account and an amount associated with the user;
a first reimbursing unit configured to reimburse the tax refund of the equivalent amount to the account.

In this embodiment, the apparatus for credit tax refundment may further include:
a default warning unit configured to generate default warning information and transmit the default warning information to a defaulting user, wherein the default warning information includes indication of punishment measures for default.

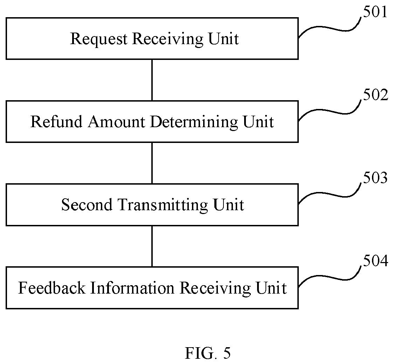

As shown, FIG. 5 is part two of the functional block diagram of the apparatus for credit tax refundment according to an embodiment of the present disclosure. The apparatus for credit tax refundment may include:
a request receiving unit 501 configured to receive a request for credit tax refundment, wherein the request for credit tax refundment may include identity information, an account and consumption information of a user applying for refundment;
a refund amount determining unit 502 configured to determine a refund amount based on the consumption information;
a second transmitting unit 503 configured to transmit the request for credit tax refundment and the refund amount;
a feedback information receiving unit 504 configured to receive refundment result information corresponding to the request for credit tax refundment. The refundment result information may be obtained based on eligibility for credit tax refundment of the user corresponding to the identity information, and the refund amount.

In this embodiment, the apparatus for credit tax refundment may further include:
a second reimbursing unit configured to transmit information on tax refund of the equivalent amount to a collaborator refundment server in the case that a valid refundment credential is received from the user corresponding to the request for credit tax refundment, wherein the valid refundment credential may be a tax refundment voucher that meets refundment requirements and is valid within a prescribed period of time.

In this embodiment, the apparatus for credit tax refundment may further include:
a user default information generating unit configured to generate user default information if it is failed to receive the valid refundment credential from the user corresponding to the request for credit tax refundment.

The second transmitting unit may be further configured to transmit the user default information to the collaborator refundment server.

In this embodiment, the apparatus for credit tax refundment may further include:
a reimbursement request generating unit configured to generate a reimbursement request if the valid refundment credential is received from the user corresponding to the request for credit tax refundment subsequently.

The second transmitting unit may be configured to transmit the reimbursement request to the collaborator refundment server.

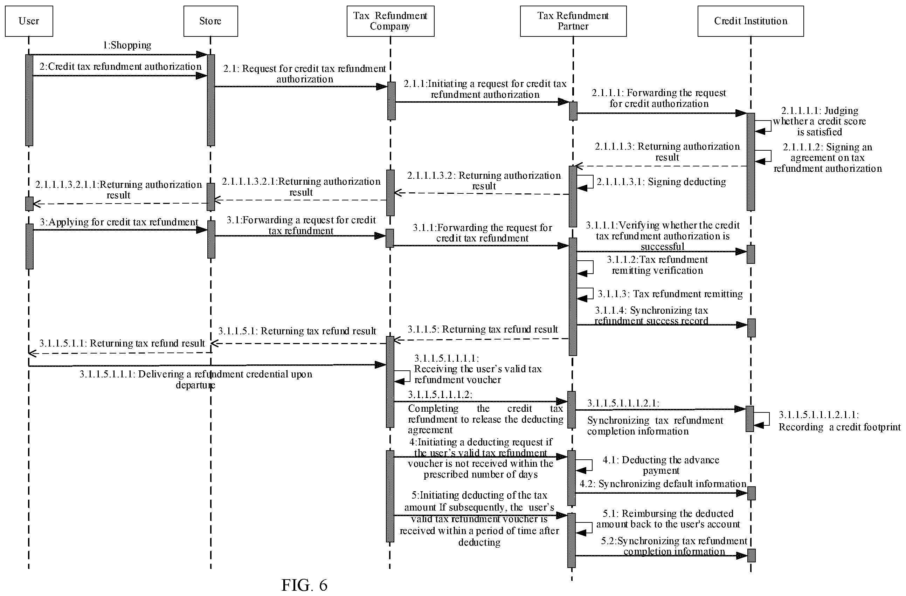

As shown, FIG. 6 is a schematic diagram showing interaction between terminals of various roles in a system for credit tax refundment according to an embodiment of the present disclosure. The system may include a user terminal, a terminal of overseas store system, a terminal of tax refundment company system, a terminal of credit institution system, and a terminal of tax refundment partner system. The terminal of tax refundment partner system and the terminal of credit institution system may share a server terminal. In this embodiment, the terminal of tax refundment partner system may be associated with Alipay tax refundment, and the terminal of credit institution system may be associated with credit score of Sesame Credit.

After the user finishes shopping in an overseas store, a request for credit tax refundment may be generated with the user terminal to apply for credit tax refundment. The overseas store system may access the tax refundment company system to apply for credit tax refundment upon receipt of the request for credit tax refundment. The terminal of tax refundment company system may access the Alipay system, which in turn may access a Sesame Credit system for authorization of user tax refundment, and the authorization may be obtained only when the user has a credit score above a set threshold. Then the Alipay may sign a deduction agreement with the user. The terminal of tax refundment company system may access the Alipay to issue a request for credit tax refundment. The Alipay accepts the request and remits a tax refund into the user's account by advance payment, and the user receives the tax refund.

When the user checks out at the customs, he/she may obtain a paper refundment credential stamped by the customs and then deliver it to a designated mailbox of the tax refundment company. Alternatively, the user may obtain an electronic tax refundment voucher verified and examined by a customs departure confirmation system, and send the electronic tax refundment voucher to the tax refundment company server via internet.

If the tax refundment company receives the user's refundment credential within a prescribed period of time, a credit footprint of the user may be recorded in the Sesame Credit system. Otherwise, if the tax refundment company fails to receive the user's refundment credential within the prescribed period of time, the Alipay may deduct the advance payment from the user's account and synchronizes the default information to the Sesame Credit system.

If subsequently the tax refundment company receives the user's refundment credential, the tax refundment company may initiate a reimbursement procedure, in which the Alipay may reimburse the deducted amount back to the user's account and refresh the Sesame Credit system to keep from impacting the user's credit status.

In practice, upon receipt of the valid tax refundment voucher, the tax refundment company may reimburse the tax refund corresponding to the tax refundment voucher to the Alipay. Thus the Alipay can reclaim the advance payment from the tax refundment company, so as to accomplish settlement between the tax refundment company and the tax refundment partner.

In this disclosure, a user can utilize a credit tax refundment service as long as he/she is eligible for credit tax refundment. Such a novel guarantee mechanism allows the user to have the tax refunded in advance. Moreover, the user does not necessarily have to have a credit card of a designated bank in order to apply for the tax refundment, eliminating the case that the tax refundment get failed because the credit card limit is lower than the refund amount. Meanwhile, it helps to urge the user to keep good credit, and thus to promote the improvement of social credit level and good manner.

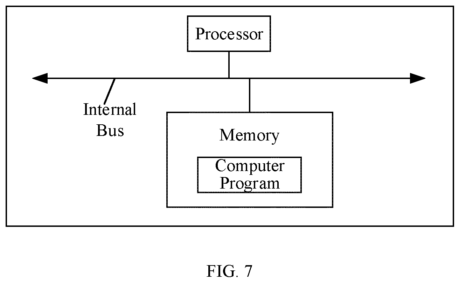

As shown, FIG. 7 is a schematic diagram of an electronic device according to an embodiment of the present disclosure. The electronic device may include a memory, a processor, and a computer program stored in the memory and runnable on the processor, the processor, when executing the computer program, implements the method for credit tax refundment as described above with reference to FIGs. 2 and 3.

In the electronic device of this embodiment, the specific functionalities implemented by the memory and the processor can be comprehended with reference to the foregoing embodiments, and the same technical effect as that of the foregoing embodiments can be achieved, therefore detailed description is omitted herein.

In this embodiment, the memory may include physical devices for storing information, which may store, after digitalization, information in electrical, magnetic or optical manner. The memory in this embodiment may further include an apparatus for storing information in an electronic manner, such as RAM, ROM, and the like; an apparatus for storing information in a magnetic manner, such as a hard disk, a floppy disk, a magnetic tape, a magnetic core memory, a bubble memory, a USB flash disk; an apparatus for storing information in an optical manner, such as a CD or a DVD. Of course, there may be other types of memories, such as a quantum memory, a graphene memory, and the like.

In this embodiment, the processor may be implemented in any suitable manner. For example, the processor may take the form of such as a microprocessor or a processor, as well as a computer readable medium storing computer readable program codes (e. g., software or firmware) executable by the (micro) processor, a logic gate, a switch, an Application Specific Integrated Circuit (ASIC), a programmable logic controller, an embedded microcontroller, etc.

In this embodiment, there is provided a machine readable storage medium having stored thereon a computer program which, when executed, implements the steps of the method for credit tax refundment as described above.

As comprehensible to those skilled in the art, in addition to implementing the client and the server in the form of pure computer readable program codes, it is definitely possible to embody the method in a program to enable a client and a server to implement the same functionalities in the form of such as a logic gate, a switch, an application-specific integrated circuit, a programmable logic controller, or an embedded microcontroller. Thus, such a client and the server may be regarded as a hardware part, while means included therein for implementing respective functions may also be regarded as components in the hardware part. Or, the means for implementing respective functions even may be regarded as both software modules that implement the method and components in the hardware part.

From the above description of the embodiments, it is clear to persons skilled in the art that the present disclosure may be implemented by means of software plus necessary general-purpose hardware platform. In this sense, the technical solutions of the present disclosure can essentially be, or a part thereof that manifests improvements over the prior art can be, embodied in the form of a computer software product, which may be stored in a storage medium such as an ROM/RAM, a magnetic disk, an optical disk, etc., and which may include instructions to cause a computer device (e.g., a personal computer, a server, or a network device, etc.) to perform the methods described in embodiments or some parts thereof in the present disclosure.

The embodiments in the present disclosure are described in a progressive manner, which means descriptions of each embodiment are focused on the differences from other embodiments, and the descriptions of the same or similar aspects of the embodiments are applicable in common. In particular, for the embodiments of the client and server, reference can be made to the embodiments of the method.

The present disclosure may be described in the general context of computer executable instructions executed by the computer, e.g., the program module. Generally, the program module includes a routine, a program, an object, a component, a data structure, and the like that execute a particular task or realize a particular abstract data type. The present disclosure may also be practiced in a distributed computing environment in which tasks are executed by remote processing devices connected by a communication network. In the distributed computing environments, the program modules may be located in a local and remote computer storage medium which include a storage device.

In the 1990s, it is easy to tell whether a technical improvement is a hardware improvement (for example, an improvement to a circuit structure such as a diode, a transistor, a switch, etc.), or a software improvement (an improvement to a methodical flow). However, with the development of technologies, many improvements to methodical processes nowadays can be regarded as improvements to the hardware circuit structures. Basically all improved methodical processes can be programmed into a hardware circuit to obtain corresponding hardware circuit structures. Therefore, it can not be ruled out to implement an improvement to a methodical process with a physical hardware module. For example, a Programmable Logic Device (PLD) (e.g., Field Programmable Gate Array (FPGA)) is an integrated circuit of which logical functions are determined by user's programming of the device. The designer programs by himself to 'integrate' a digital system onto a piece of PLD, without needing to design and manufacture the ASIC chip by a chip manufacturer. Moreover, at present, instead of manually manufacturing the integrated circuit chips, such programming is mostly implemented using software 'logic compiler', which is similar to the software compiler used for the program development, and the original codes to be compiled should be written in a specific programming language referred to as Hardware Description Language (HDL). There are many kinds of HDLs, such as Advanced Boolean Expression Language (ABEL), Altera Hardware Description Language (AHDL), Confluence, Cornell University Programming Language (CUPL), HDCal, Java Hardware Description Language (JHDL), Lava, Lola, MyHDL, PALASM, Ruby Hardware Description Language (RHDL), etc., and currently the most commonly used is Very-High-Speed Integrated Circuit Hardware Description Language (VHDL) and Verilog. It is comprehensible to those skilled in the art that a hardware circuit that implements a methodical process can be easily obtained by adequately programming the methodical process into an integrated circuit with the aforementioned hardware description languages.

The controller may be implemented in any suitable way. For example, the controller may take the form of, for example, a microprocessor or processor, and a computer readable medium storing computer readable program codes (e.g., software or firmware) executable by the (micro) processor, a logic gate, a switch, an application-specific integrated circuit (ASIC), a programmable logic controller, and an embedded microcontroller. Examples of the controller include, but not limited to, the microcontrollers such as ARC 625D, Atmel AT91SAM, Microchip PIC18F26K20, and Silicone Labs C8051F320. A memory controller may also be implemented as a part of control logic of the memory. As known to those skilled in the art, in addition to implementing the controller in the form of the pure computer readable program codes, it is definitely possible to embody the method in a program to enable a controller to implement the same functionalities in the form of such as a logic gate, a switch, an application-specific integrated circuit, a programmable logic controller, or an embedded microcontroller. Thus, such a controller may be regarded as a hardware part, while means included therein for implementing respective functions may also be regarded as components in the hardware part. Or, the means for implementing respective functions even may be regarded as both software modules that implement the method and components in the hardware part.

Specifically, the system, apparatus, module or unit set forth in the above embodiments can be implemented by a computer chip or an entity, or by a product of manufacture having a certain function. A typical device implementation is a computer. Specifically, the computer may be, for example, a personal computer, a laptop computer, an on-board human-computer interaction device, a cellular phone, a camera phone, a smart phone, a personal digital assistant, a media player, a navigation device, an email device, a game console, a tablet computer, a wearable device, or a combination of any of these devices.

Although the embodiments of the present disclosure provide steps of the method as described in the embodiments or the flowcharts, more or fewer steps may be included in the method. The order of the steps specified in the embodiments is merely an example of the execution orders of the steps, and it is not intended to limit the present disclosure to this specific order. When the method is actually executed in a device or terminal, the steps may be performed in serial or in parallel (e.g., in an environment of parallel processors or multi-threaded processing and even in a distributed data processing environment) according to the methods depicted in the embodiments or drawings. The terms "comprise", "include" or any other variant do not mean to be exclusive in that a process, a method, a product or a device comprising or including a number of elements may comprise or include not only those elements, but also other elements not explicitly listed, or further comprise or include inherent elements of such process, method, product or device. It is not excluded that a process, method, product or device comprising an element may further comprise other identical or equivalent elements, if not specifically prescribed.

For convenience, in this disclosure an apparatus is segmented into a plurality of units or modules in functionality to separately describe. However, in implementation of the embodiments of this disclosure, the functions of plural modules may be implemented in one software and/or hardware element, or one module for implementing a function can be implemented by a plurality of sub-modules or sub-units. The above-described device embodiments are merely illustrative. In particular, segmentation of a device into units is merely in logic, and there may be other segmentations in actual implementation, for example, multiple units or components can be combined or integrated into another system, or some features can be omitted or deactivated. In addition, the illustrated or described mutual couplings between interfaces, units or devices may be direct couplings, or indirect couplings or realized by communication connections, and can be in electrical, mechanical or other forms.

As comprehensible to those skilled in the art, in addition to implementing the controller in the form of pure computer readable program codes, it is definitely possible to embody the method in a program to enable a controller to implement the same functionalities in the form of such as a logic gate, a switch, an application-specific integrated circuit, a programmable logic controller, or an embedded microcontroller. Thus, such a controller may be regarded as a hardware part, while means included therein for implementing respective functions may also be regarded as components in the hardware part. Or, the means for implementing respective functions even may be regarded as both software modules that implement the method and components in the hardware part.

The present disclosure is described with reference to flowcharts and/or block diagrams of the method, the device (system) and the computer program product according to the embodiments. It should be understood that the blocks in the flowcharts and/or block diagrams, and the combination of the blocks in the flowcharts and/or block diagrams can be realized by the computer program instructions. These computer program instructions can be provided to a processor of a general-purpose computer, a special-purpose computer, an embedded processor or other programmable data processing device to produce a machine, so that an apparatus configured to implement functions designated in one or more blocks in the flowcharts and/or block diagrams can be produced by the instructions executed by the processor of the computer or other programmable data processing device.

These computer program instructions can be stored in a computer-readable memory that enables a computer or other programmable data processing device to operate in a special way, so that the instructions stored in the computer-readable memory forms an article of manufacture embodying an instruction means which implements functions specified in one or more blocks in the flowcharts and/or block diagrams.

These computer program instructions can be loaded onto a computer or other programmable data processing device, on which a series of operations are performed as computer implemented process, so that the instructions executed on the computer or other programmable data processing device provides steps for achieving functions specified in one or more blocks in the flowcharts and/or block diagrams.

In a typical configuration, the computing device may include one or more processors (CPUs), an input/output interface, a network interface, and a memory.

The memory may include a non-permanent memory, a Random-Access Memory (RAM) and/or a nonvolatile memory, such as Read-Only Memory (ROM) or a flash RAM, which belong to computer readable medium. The memory is an example of the computer readable medium.

The computer-readable medium includes permanent and non-permanent, removable and non-removable media, and can realize information storage in any method or technique. The information can be computer readable instructions, data structures, program modules or other data. An example of the computer storage medium includes, but not limited to, a phase change memory (PRAM), a static random access memory (SRAM), a dynamic random access memory (DRAM), other types of random access memory (RAM), a read-only memory (ROM), an electrically-erasable programmable read-only memory (EEPROM), a flash memory or other memory techniques, a compact disk read only memory (CD-ROM), a digital versatile disc (DVD) or other optical storages, a cassette tape, a magnetic tape/magnetic disk storage or other magnetic storage device, or any other non-transmission medium, which can be used for the storage of information accessible to a computing device. According to the definitions herein, the computer readable medium does not include transitory media, such as modulated data signal and carrier wave.

Persons skilled in the art shall understand that, the embodiments of the present disclosure can be provided as a method, a system or a computer program product. Therefore, the embodiments of the present disclosure can adopt the forms of an entire hardware embodiment, an entire software embodiment, or an embodiment combining software and hardware. Moreover, the embodiments of the present disclosure can adopt the form of a computer program product that is implemented on one or more computer-accessible storage medium (including but not limited to a magnetic disk memory, a CD-ROM, an optical memory, etc.) including computer- accessible program codes.

The embodiments of the present disclosure may be described in the general context of computer executable instructions executed by the computer, e.g., a program module. Generally, the program module includes a routine, a program, an object, a component, a data structure, and the like that execute a particular task or realize a particular abstract data type. The present disclosure may also be practiced in a distributed computing environment in which tasks are executed by remote processing devices connected by a communication network. In the distributed computing environments, the program modules may be located in a local and remote computer storage medium which include a storage device.

The embodiments in the present disclosure are described in a progressive manner, which means descriptions of each embodiment are focused on the differences from other embodiments, and the descriptions of the same or similar aspects of the embodiments are applicable in common. In particular, for the embodiments of the system embodiments, reference can be made to the method embodiments, and detailed description may be omitted. In the descriptions of the present disclosure, terms such as "one embodiment", "some embodiments", "example", "specific example" or "some examples" imply that specific features, structures, materials or characteristics described in association with that embodiment or example are included in at least one embodiment or example in the present disclosure. In the present disclosure, descriptions associated with such terms do not necessarily pertains to the same embodiment or example. Rather, the described features, structures, materials or characteristics may be combined in a suitable manner in any one or more of the embodiments or examples. Furthermore, those skilled in the art can combine different embodiments or examples described in the present disclosure, and combine features of the different embodiments or examples, provided that they are not contradictory to each other.

The above descriptions involve merely some embodiments of the present disclosure, and are not intended to limit the embodiments of the present disclosure. Various modifications and variations may be made to the embodiments of the present disclosure by those skilled in the art. Any modifications, equivalents, improvements, and the like made within the spirit and principle of the embodiments of the present disclosure shall fall within the scope of the present disclosure.

Although the present disclosure has been described with reference to the embodiments, those skilled in the art should understand that there may be many modifications and variations to the present disclosure without departing from the spirit thereof, and it is intended that the appended claims cover those modifications and variations without departing from the spirit of the present disclosure.

## Claims

1. A method for credit tax refundment, comprising:
receiving a request for credit tax refundment and a refund amount;
parsing said request for credit tax refundment to obtain identity information of a user applying for refundment;
determining whether or not a user corresponding to said request is eligible for credit tax refundment based on the identity information of the user;
obtaining an associated account based on the identity information of the user and remitting a tax refund of an equivalent amount into the associated account, in the case that the user corresponding to said request is eligible for credit tax refundment.

2. The method for credit tax refundment according to claim 1, further comprising:
generating refundment result information based on eligibility for credit tax refundment of the user corresponding to said identity information, and the refund amount;
transmitting said refundment result information.

3. The method for credit tax refundment according to claim 1, wherein determining whether or not a user corresponding to said request is eligible for credit tax refundment based on the identity information of the user comprises:
acquiring historical behavior information of the user corresponding to said request based on the identity information of the user;
evaluating the historical behavior information of the user according to a credit rule, to determine whether said user is eligible for credit tax refundment.

4. The method for credit tax refundment according to claim 3, wherein remitting a tax refund of an equivalent amount into the associated account comprises:
determining whether the user has signed an agreement on credit tax refundment authorization in the case that said user is eligible for credit tax refundment, wherein said agreement on credit tax refundment authorization enables the user to utilize the credit tax refundment within a set period of time and/or for a set number of times provided that the user is eligible for credit tax refundment; and
effecting the credit tax refundment by obtaining the associated account based on the identity information of the user, and remitting the tax refund of equivalent amount to the associated account, if it is determined that the user has signed the agreement on credit tax refundment authorization.

5. The method for credit tax refundment according to claim 3 or 4, wherein evaluating the historical behavior information of the user according to the credit rule to determine whether said user is eligible for credit tax refundment comprises:
evaluating the historical behavior information of the user according to the credit rule to obtain a credit score of the user;
acknowledging that the user corresponding to said request is eligible for credit tax refundment, if the credit score of the user is greater than or equal to a threshold.

6. The method for credit tax refundment according to any one of claims 1 to 4, further comprising:
receiving, from a refundment server, the tax refund of the equivalent amount.

7. The method for credit tax refundment according to any one of claims 1 to 4, further comprising:
receiving user default information from a refundment server;
parsing the user default information to obtain identity information, an account and an amount associated with a defaulting user.

8. The method for credit tax refundment according to claim 7, further comprising:
deducting the tax refund of the equivalent amount from said account.

9. The method for credit tax refundment according to claim 8, further comprising:
receiving, from the refundment server, a reimbursement request;
parsing the reimbursement request to obtain identity information, an account and an amount associated with a user applying for reimbursement;
reimbursing the tax refund of the equivalent amount to said account.

10. The method for credit tax refundment according to any one of claims 1 to 4, further comprising:
generating default warning information and transmitting the default warning information to a defaulting user, wherein the default warning information comprises indication of punishment measures for default.

11. An apparatus for credit tax refundment, comprising:
a request acquiring unit configured to receive a request for credit tax refundment and a refund amount;
a request parsing unit configured to parse said request for credit tax refundment to obtain identity information of a user applying for tax refundment;
an eligibility verifying unit configured to determine whether or not a user corresponding to said request is eligible for credit tax refundment based on the identity information of the user;
a prepaying unit configured to obtain an associated account based on the identity information of the user and remit a tax refund of equivalent amount into the associated account, in the case that the user corresponding to said request is eligible for credit tax refundment.

12. The apparatus for credit tax refundment according to claim 11, further comprising:
a feedback information generating unit configured to generate refundment result information based on eligibility for credit tax refundment of the user corresponding to said identity information, the account and the refund amount;
a first transmitting unit configured to transmit said refundment result information.

13. The apparatus for credit tax refundment according to claim 11, wherein said eligibility verifying unit comprises:
a historical behavior information acquiring module configured to acquire historical behavior information of the user corresponding to said request based on the identity information of the user;
an evaluating module configured to evaluate the historical behavior information of the user according to a credit rule to determine whether said user is eligible for credit tax refundment.

14. The apparatus for credit tax refundment according to claim 13, wherein said prepaying unit comprises:
an authorization determining module configured to determine whether the user has signed an agreement on credit tax refundment authorization in the case that said user is eligible for credit tax refundment, wherein said agreement on credit tax refundment authorization enables the user to utilize the credit tax refundment within a set period of time and/or for a set number of times;
a refunding module configured to effect the credit tax refundment by obtaining the associated account based on the identity information of the user and remitting the tax refund of the equivalent amount into the associated account, if it is determined that the user has signed the agreement on credit tax refundment authorization.

15. The apparatus for credit tax refundment according to claim 13 or 14, wherein the evaluating module comprises:
a credit score sub-module configured to evaluate the historical behavior information of the user based on the credit rule to obtain a credit score of the user;
a judging sub-module configured to acknowledge that the user corresponding to said request is eligible for credit tax refundment, if the credit score of the user is greater than or equal to a threshold.

16. The apparatus for credit tax refundment according to any one of claims 11 to 14, further comprising:
a reimbursement receiving unit configured to receive a reimbursed tax refund of the equivalent amount.

17. The apparatus for credit tax refundment according to any one of claims 11 to 14, further comprising:
a default information receiving unit configured to receive user default information;
a default information parsing unit configured to parse the user default information to obtain identity information, an account and an amount associated with a defaulting user.

18. The apparatus for credit tax refundment according to claim 17, further comprising:
a deducting unit configured to deduct the tax refund of the equivalent amount from said account.

19. The apparatus for credit tax refundment according to claim 18, further comprising:
a reimbursement requesting unit configured to receive a reimbursement request;
a reimbursement request parsing unit configured to parse the reimbursement request to obtain identity information, an account and an amount associated with the user;
a first reimbursing unit configured to reimburse the tax refund of the equivalent amount to said account.

20. The apparatus for credit tax refundment according to any one of claims 11 to 14, further comprising:
a default warning unit configured to generate default warning information and transmit the default warning information to a defaulting user, wherein the default warning information comprises indication of punishment measures for default.

21. A method for credit tax refundment, comprising:
receiving a request for credit tax refundment, wherein the request for credit tax refundment comprises identity information, an account and consumption information of a user applying for refundment;
determining a refund amount based on said consumption information;
transmitting said request for credit tax refundment and the refund amount;
receiving refundment result information corresponding to said request for credit tax refundment, wherein said refundment result information is obtained based on eligibility for credit tax refundment of the user corresponding to said identity information and the refund amount.

22. The method for credit tax refundment according to claim 21, further comprising:
transmitting information on the tax refund of the equivalent amount to a collaborator refundment server in the case that a valid refundment credential is received from the user corresponding to said request for credit tax refundment, wherein the valid refundment credential is a refundment voucher that meets refundment requirements and is valid within a prescribed period of time.

23. The method for credit tax refundment according to claim 21, further comprising:
generating user default information if it is failed to receive the valid refundment credential from the user corresponding to said request for credit tax refundment;
transmitting said user default information to a collaborator refundment server.

24. The method for credit tax refundment according to claim 23, further comprising:
generating a reimbursement request if the valid refundment credential is received from the user corresponding to said request for credit tax refundment subsequently;
transmitting the reimbursement request to the collaborator refundment server.

25. An apparatus for credit tax refundment, comprising:
a request receiving unit configured to receive a request for credit tax refundment, wherein said request for credit tax refundment comprises identity information, an account and consumption information of a user applying for refundment;
a refund amount determining unit configured to determine a refund amount based on said consumption information;
a second transmitting unit configured to transmit said request for credit tax refundment and the refund amount;
a feedback information receiving unit configured to receive refundment result information corresponding to said request for credit tax refundment, wherein said refundment result information is obtained based on eligibility for credit tax refundment of the user corresponding to said identity information and the refund amount.

26. The apparatus for credit tax refundment according to claim 25, further comprising:
a second reimbursing unit configured to transmit information on the tax refund of the equivalent amount to a collaborator refundment server in the case that a valid refundment credential is received from the user corresponding to said request for credit tax refundment, wherein the valid refundment credential is a refundment voucher that meets refund requirements and is valid within a prescribed period of time.

27. The apparatus for credit tax refundment according to claim 25, further comprising:
a user default information generating unit configured to generate user default information if it is failed to receive the valid refundment credential from the user corresponding to said request for credit tax refundment,
wherein the second transmitting unit is further configured to transmit said user default information to a collaborator refundment server.

28. The apparatus for credit tax refundment according to claim 27, further comprising:
a reimbursement request generating unit configured to generate a reimbursement request if the valid refundment credential is received from the user corresponding to said request for credit tax refundment subsequently,
wherein the second transmitting unit is further configured to transmit the reimbursement request to the collaborator refundment server.

29. An electronic device comprising a memory, a processor and a computer program stored in said memory and runnable on said processor, wherein said processor is configured to implement, in executing said computer program, the method for credit tax refundment according to any one of claims 1 to 10 or claims 21 to 24.

30. A machine readable storage medium on which a computer program is stored, wherein said computer program is configured to implement, when being executed, the steps of the method for credit tax refundment according to any one of claims 1 to 10 or claims 21 to 24.

31. A system for credit tax refundment, comprising the apparatus for credit tax refundment according to any one of claims 11 to 20 and the apparatus for credit tax refundment according to any one of claims 25 to 28.
